# EUROPEAN PATENT SPECIFICATION

(11) **EP 2 675 282 B1**
(45) Date of publication and mention of the grant of the patent: **10.04.2019**
(21) Application number: 12703542.6
(22) Date of filing: 10.02.2012
(51) Int. Cl.: A23D 9/00, H01B 3/22

(54) **VEGETABLE DIELECTRIC FLUID FOR ELECTRICAL TRANSFORMERS**
PFLANZLICHEN DIELEKTRISCHE FLÜSSIGKEIT FÜR ELEKTRISCHE TRANSFORMATOREN
FLUIDE DIÉLECTRIQUE VÉGÉTAL POUR TRANSFORMATEURS ÉLECTRIQUES

(30) Priority: 14.02.2011 IT GE20110016
(43) Date of publication of application: 25.12.2013
(73) Proprietor: A.&A. Fratelli Parodi S.P.A., 16014 Campomorone, GE (IT)
(72) Inventor: PARODI, Augusto, I-16167 Genova (IT); MARINI, Leandro, I-16014 Ceranesi (GE) (IT); PARRONE, Salvatore, I-16126 Genova (IT); CAMPI, Roberto, I-16162 Genova (IT)
(74) Representative: Pallini Gervasi, Diego
(86) International application number: PCT/EP2012/052361
(87) International publication number: WO 2012/110432

(56) References cited:
- EP-A1- 2 128 873
- US-B1- 6 528 075
- DE SOUZA ET AL.: "ESTABILIDADE OXIDATIVA DOS ÓLEOS DE MACADÂMIA E DE PISTACHE - OXIDATIVE STABILITY OF MACADEMIA AND PISTACHIO OILS", CENTRO DE PESQUISA E PROCESSAMENTO DE ALIMENTOS. BOLETIM, vol. 25, no. 1, 2007, pages 141-156, XP002658815, PROCESSAMENTO DE ALIMENTOS, ISSN: 0102-0323
- WENHSI CHUA ET AL: "The Growth of Thin Lubricating Films of Plant Oils", TRIBOLOGY LETTERS, KLUWER ACADEMIC PUBLISHERS-PLENUM PUBLISHERS, NE, vol. 41, no. 2, 4 December 2010 (2010-12-04), pages 451-462, XP019878081, ISSN: 1573-2711, DOI: 10.1007/S11249-010-9731-0
- HOLCAPEK M ET AL: "Characterization of triacylglycerol and diacylglycerol composition of plant oils using high-performance liquid chromatography-atmospheric pressure chemical ionization mass spectrometry", JOURNAL OF CHROMATOGRAPHY, ELSEVIER SCIENCE PUBLISHERS B.V, NL, vol. 1010, no. 2, 29 August 2003 (2003-08-29), pages 195-215, XP004447874, ISSN: 0021-9673, DOI: 10.1016/S0021-9673(03)01030-6

## Description

The present invention relates to a composition of one or more vegetable oils suitable as dielectric fluid with significant qualities as regards resistivity, dielectric strength, biodegradability and oxidation resistance to be used within insulating and cooling systems typical of current transformers. The invention further relates to the use of a composition comprising one or more vegetable oils as dielectric fluid and to a method for preparing said composition.

The dielectric fluids used in the electric industry generally are gases or liquids which act for cooling and insulating the parts in contact thereto.

Liquids used as dielectric fluids can have different origins.

Mineral oils derived from petroleum are mainly used as dielectric fluids.

Mineral oils are widely available, have good dielectric properties, cooling properties, a low viscosity at high temperatures and a good behaviour at very low temperatures . They further have a high oxidation stability.

Because of their special molecular structure that they have obtained over time, mineral oils are particularly stable when used in current transformers, thereby they are the most used fluids for this purpose.

Companies manufacturing mineral oils have also promoted the use of said oils ignoring the environmental impact, even where risks of being spilled in the environment were particularly high. Due to their chemical composition they have a poor biodegradability and a spill in the environment of these oils can cause the ecosystem to be damaged even for many years. Mineral oils are highly combustible and this can be dangerous in the event of fire or explosion

Current regulations about the use of dielectric fluids require fluids that are used to have a high flash point.

Moreover the fact that mineral oils are inadequate as regards the flash point, a characteristic that cannot be improved by adding additives, has led to the production and use of synthetic oils containing polychlorobiphenyls (PCBs), which are excellent fluids to be used in electrical transformers but they have a high environmental impact as they are not biodegradable .

This adverse characteristic has led to regulations that have stopped their production and have led them not to be used anymore, that is said fluids have been replaced into the transformers.

Due to a lack of alternatives, mineral oils have again gained ground, while leaving unresolved the problem of the environmental impact in case of accidental spill, and the risk related to the low flash point.

In the last years, the search for new liquids suitable as dielectric fluids has been speeded up thanks to a strong environmental awareness and to the carbon dioxide reduction policy. The American patent US 4355346 describes a capacitor wherein the dielectric fluid is completely biodegradable and it is made of 1,1-bis(3,4-dimethylphenyl)ethane.

The American patent US 3996505 describes an electrical apparatus wherein the dielectric system comprises a polymeric film impregnated with biodegradable polybutene.

The English patent GB 1509681 describes a dielectric liquid made of a mixture of mono-halogenated diphenyl oxide and a mono-halogenated alkyl diphenyl oxide where the alkyl group contains from 1 to 20 carbon atoms. The liquid dielectric composition is substantially biodegradable.

The patent US 4284522 describes a biodegradable composition to be used as a dielectric fluid formed from natural hydrocarbons and synthetic hydrocarbons.

The use of vegetable oils as dielectric fluids is also known.

Vegetable oils have been considered as suitable to be used as dielectric fluids by research studies because of their intrinsic qualities such as biodegradability, the high flash point and a good dielectric constant.

Vegetable oils have a high percent of triglyceride esters of saturated and unsaturated fatty acids.

Natural exters are obtained from oils with vegetable origin through suitable refining and purification processes.

In particular it is necessary to select this oil or a mixture of oils ignoring for example too much saturated or too much unsaturated oils which are in contrast with values suitable for obtaining a liquid to be used as dielectric fluid within the insulating and cooling system typical of current transformers.

However these oils can be used only when additives are suitably added thereto in order to avoid degradation or chemical attacks to the mechanical parts of the apparatus wherein they are used, in particular a current transformer.

The use of mixtures of one or more vegetable oils to be used within electrical transformers, with a high polyunsaturated acid content, in particular linoleic acid, or with a high monounsaturated acid content, in particular with an oleic acid content more than 75% is known.

Antioxidants and corrosion inhibitors available in the standard trade distribution are added, in various percentages, to these oils, which additives are not specific for the use only with vegetable oils for transformers .

The main advantages of the use of vegetable oils as dielectric fluids are their biodegradability, their possibility of being obtained from renewable natural sources, their non-toxicity, their high fire point and their low cost, if compared to other alternative substances with a high fire point such as synthetic esters .

However, vegetable oils or their derivatives are not free of problems in their use as dielectric fluids. For example, it is important for the dielectric fluid based on vegetable oils to remain flowable even if it is subjected to low temperatures. Additives are usually used to reduce the freezing point (that is the temperature at which a liquid passes to the solid state) and to guarantee the dielectric fluid to be resistant even to the low temperatures.

One of the most important problems of vegetable oils is oxidation. Vegetable oils are polymerized when are exposed to oxygen, and the change in their properties can be an obstacle to the use of the vegetable oils as dielectric fluids. Moreover the problem of the oxidation of the dielectric fluids based on vegetable oils is emphasized in electrical apparatuses due to the catalytic activity of copper or of other metals present in this type of apparatuses.

In order to solve this problem synthetic antioxidants are usually used.

The international patent application WO 2008/113866 describes a biodegradable dielectric fluid free of antioxidant synthetic additives and comprising an oil or a mixture of vegetable oils with an oleic acid (C18:1) content greater than 75% and with a natural tocopherol content greater than 200 ppm, a metal deactivator being added to said mixture as an additive in a proportion less than 1%.

According to the above mentioned patent the problem of the oxidation is solved by using oils with a high oleic acid content, which oils are obtained by a refining process which allow natural tocopherols present in said vegetable oils in a high percentage to be preserved.

According to the above mentioned patent specific vegetable oils with a high oleic acid content and low linoleic acid content and which preserve their natural tocopherol content have enough antioxidant power to prevent non-biodegradable synthetic and antioxidant additives from being added.

The American patent application US2006/0030499 describes an electrical transformer with a dielectric fluid essentially composed of one or more vegetable oils containing from 0,1 % to 3% of one or more antioxidant compounds and wherein said dielectric fluid has an oxidative stability of 100 or more AOM hours (Active Oxygen Method) .

The oleic acid content of the dielectric fluid is at least 75%. An oil with a high oleic acid content (80%) can be derived from plant seeds such as sunflower and canola which have been genetically modified.

The international patent application WO2008/143830 describes a mixture to be used as dielectric fluid comprising at least a vegetable oil and at least an antioxidant, which mixture or which vegetable oil has a pour point less than -20°C. According to the above mentioned patent the vegetable oil is rapeseed oil. The composition described allows a dielectric fluid to be obtained which remain flowable even at low temperatures .

The patent application US 2002/0049145 describes a dielectric fluid, based on vegetable oils derived from soybean and mais, chemically modified by at least a partial hydrogenation in order to increase the oxidation stability.

The patent EP 950249 describes a composition with a high oleic acid content to be used as dielectric fluid, which composition has an oleic acid content equal to at least 75%.

The oleic acid is a monounsaturated acid which occurs as glycerol ester in many vegetable oils such as sunflower oil, olive oil and safflower oil in high proportions (about 60%) .

An oleic acid content greater 80% can be obtained from genetically modified plants and seeds.

The European Patent Application EP 2 128 873 A1 discloses a biodegradable dielectric fluid that is highly resistant to oxidation. It consists of a mixture of vegetable oils with a very high oleic acid content which is believed to conserve natural tocopherols.

Therefore the aim of the present invention is to provide a composition comprising at least an oil of vegetable origin to be used, alone or in combination with other substances, as a dielectric fluid and a method for obtaining such composition to be used as a dielectric fluid which fluid can be used in electrical apparatuses without environmental risks, said composition being non-toxic and more biodegradable than dielectric fluids based on mineral oils or synthetic oils and said composition and therefore said fluid being derivable from renewable sources.

The dielectric fluid shall have the following characteristics :
- high oxidation stability,
- a low pour point in order to work even at low operating temperatures ,
- a high viscosity index for an optimal viscosity at different operating temperatures,
- anti-corrosion ability,
- compatibility with resins, polymers, insulating and sealing materials,
- maintaining their insulating and cooling characteristics even after chemical or physical changes that may occur in use.

According to the present invention, it is therefore provided a composition of one or more vegetable oils according to claim 4. Furthermore, in accordance with the present invention, it is provided a composition of one or more vegetable oils according to claim 5. It is further provided a use of a composition comprising one or more vegetable oils according to claim 1 and a method for preparing a composition comprising one or more vegetable oils according to claim 16.

The dielectric fluid obtained from these compositions meet specific requirements of the industry and/or has a behaviour like that of the existing fluids .

Moreover the dielectric fluids object of the present invention has a long life and it carry out their functions within a wide range of operating and environmental conditions.

Therefore the object of the present invention is a dielectric fluid composition of one or more vegetable oils whose properties make it suitable to be used as dielectric fluid.

Said dielectric fluid is economically advantageous as regards the production and use.

These and other characteristics and advantages of the present invention will be more clear from the following description and examples.

Usually vegetable oils have a high percentage of triglyceride esters of saturated or unsaturated fatty acids .

Pure oils are triglycerides of fatty acids with a chain of carbon atoms ranging from 6 to 22 carbon atoms.

When the carbon atom chain has no double bonds the fatty acid is defined as saturated (Cn:0). Chains with a single double bond are designated as monounsaturated (Cn:1), with two double bonds (Cn:2) as diunsaturated and so forth.

The oleic acid is a monounsaturated acid with 18 carbon atoms C18:1.

When the fatty acid is saturated the triglyceride is either a semi-solid or a liquid with a high freezing point. On the contrary unsaturated fatty acids produce oils with low freezing points. However, monounsaturated acids are preferred over diunsaturated or triunsaturated acids because the latter tend to make the oil more vulnerable to oxidation. The increase of the saturated fatty acids raises the pour point.

Oils with a high percentage of diunsaturated or triunsaturated acids can be used as fluids into electrical apparatuses but they quickly get oxidized.

The choice of the oil or of a mixture of oils to be used as dielectric fluids is for example based on their freezing point.

Therefore oils with high percentages of long chain saturated fatty acids are not very suitable, in particular lauric acid, myristic acid, palmitic acid, stearic acid.

Considering their disposition to oxidation the oils with high percentages of polyunsaturated acids such as the linoleic acid and the linolenic acid cannot be used as dielectric fluids.

Considering the disposition to oxidation of the vegetable oils due to:
- the oil composition,
- the contact of the oil with the oxygen present in the air,
- the operating temperature,
the object of the present invention is a composition of one or more vegetable oils to be used as dielectric fluid in accordance with claims 4 or 5.

The high oleic sunflower does not exist in nature but is derived from seeds or plants whose genetic code has been modified and/or selected.

The object of the present invention preferably is a composition of one or more oils intended as non OGM natural esters that is oils derived from plants or seeds that have not been genetically modified but the composition can contain or can be composed also of one or more oils derived from genetically modified and/or selected plants and/or seeds , since even the latter can be chemically and physically used as dielectric fluids.

Said composition of one or more oils is used alone or in combination with other substances for preparing a liquid to be used as dielectric fluid.

In the composition of one or more oils according to the present invention, intended as triglycerides of natural origin, there is provided:
- a monounsaturated acid content in a particularly high or medium high percentage,
- a high percentage content of medium and long chain acids .

Particularly in the oil composition object of the present invention predominant acids are:
- oleic acid (C18:1),
- palmitoleic acid (C16:1).

The composition further comprises, in small amounts:
- linolenic acid (C18:3) and/or linoleic acid (C18:2).

According to the present invention:
- the oleic acid content is less than 75%, preferably less than or equal to 74%,
- the palmitoleic acid content ranges from 1% to 25%,
- the linolenic acid content is less than 0,5%.

In one embodiment the oleic acid content is less than 75%, preferably less than or equal to 74% and the palmitoleic acid content is more than 2%.

Compositions of one or more vegetable oils are described below, which, according to the present invention, can be used as a base for preparing a dielectric fluid.

According to one aspect of the present invention, the composition comprises a mixture of high oleic sunflower oil and macadamia nut oil. The high oleic sunflower oil content of said mixture ranges from 40% to 90% and the macadamia nut oil content ranges from 10% to 60%.

Preferably the macadamia nut oil content does not exceed 35%.

According to a preferred embodiment the mixture has a high oleic sunflower oil content of 74% and macadamia nut oil content of 26% and said mixture has an oleic acid C18:1 content of about 74% and a palmitoleic acid C16:1 content of about 7%. Said mixture is especially advantageous as regards production costs.

According to a further aspect of the present invention, the composition comprises a mixture of hazelnut oil and of macadamia nut oil. Said mixture has a hazelnut oil content ranging from 40% to 90% and a macadamia nut oil content ranging from 10% to 60%.

Preferably the macadamia nut oil content does not exceed 35%.

According to a preferred embodiment the mixture has a hazelnut oil content of 74% and a macadamia nut oil content of 26% and said mixture has an oleic acid C18:1 content of about 74% and a palmitoleic acid C16:1 content of about 7%.

According to a further aspect of the present invention, the composition comprises a mixture of high oleic sunflower oil and MCT oil physically extracted from chemically unmodified coconut oil. Said mixture has a high oleic sunflower oil content ranging from 60% to 95% and a MCT oil content ranging from 5% to 40%.

According to a preferred embodiment the mixture has a high oleic sunflower oil content of 90% and a MCT oil content of 10% and said mixture has an oleic acid C18:1 content of about 74%.

According to a further further aspect of the present invention, the composition comprises a mixture of hazelnut oil and MCT oil physically extracted from chemically unmodified coconut oil. Said mixture has a hazelnut oil content ranging from 60% to 95% and a MCT oil content ranging from 5% to 40%.

According to a preferred embodiment the mixture has a hazelnut oil content of 90% and a MCT oil content of 10% and said mixture has an oleic acid C18:1 content of about 74% .

The mixtures listed above are different from known oil mixtures for example mixtures of high oleic sunflower oil and of canola oil which have a oleic acid content ranging from 80% to 85%.

The macadamia nut oil is particularly advantageous for the aims of the present invention since it has a good palmitoleic acid content (monounsaturated acid C16:1) of about 20%.

Other compounds are rich in palmitoletic acid but are not suitable for the use as the base for producing dielectric fluids since they are rich in saturated acids :
- avocado oil has a palmitoleic acid content of about 4-7% but it is rich in saturated acids as well ,
- the animal fatt has a palmitoleic acid content of about 2,5% but it is rich in saturated acids as well.

Obvisously it is possible to add at least a further oil preferably selected among high oleic sunflower oil, hazelnut oil, macadamia nut oil, MCT oil to the mixtures made of two oils described above which oil or which oils are added to the mixtures listed above in a variable percentage.

Additives, individually or in a mixture one with the other, can be added to the mixtures described above such as at least an antioxidant, at least a copper inhibitor, at least an acidity regulator, at least a pour point depressant.

The present invention therefore relates to:
- a composition of one or more oils in accordance with claims 4 or 5
   - A use of a composition comprising one or more vegetable oils according to claim 1, and
   - A method for preparing a composition comprising one or more vegetable oils according to claim 16.

At least one additive can be added to said composition of one or more oils.

The dielectric fluid object of the present invention comprises the composition of one or more vegetable oils as described above and can further comprise one or more additives.

The dielectric fluid object of the present invention has the following physical characteristics:
a dielectric strength, according to the analytical method IEC 60156, of at least 35 KV, in particular more than 40 KV,
a dissipation factor, according to the analytical method ASTM D92 , less than 0,04% at 25°C, in particular less than 0,02% at 25°C,
   - a pour point, according to the analytical method
      ASTM D97, of at least -17°C,
a flash point, according to the analytical method AOCS Tnla-64, of at least 250°C, in particular of at least 300°C,
   - an acid number, according to the analytical method AOCS Cd3d-63, less than or equal to 0,05 mgKOH/g,
   - a viscosity, according to the analytical method ASTM D7042, ranging from 35 to 42 cSt at 40°C,
   - an electrical conductivity less than 1 pS/m at 25 °C in particular 0,15 pS/m or a lower one.

Oils of the present invention comprise oils intended as triglycerides of natural origin, said oils being provided in different amounts into the mixtures but always with an oleic acid content less than 75%, preferably less than or equal to 74%.

Additives comprise antioxidants, copper inhibitors, acidity and moisture regulators, pour point depressants that is an additive serving for lowering the pour point temperature of the product.

The composition, in particular the composition to be used as dielectric fluid, can comprise at least an antioxidant and/or at least a copper inhibitor, and/or at least an acidity and moisture regulator and/or at least a pour point depressant.

According to the present invention the additive content is always less than 5%.

According to a preferred embodiment the composition of one or more oils comprises tert-butylhydroquinone (TBHQ) as the antioxidant additive, substituted benzotriazole as the copper inhibitor, a polymethacrylate as the pour point depressant, a carbamide as the moisture and acidity regulator.

These additives are commercially available on the market and companies manufacturing them operate worldwide .

In particular additives are available, even if under different trade names, at Rhom & Haas, Afton Chemical, RheinChemie, Lubrizol, Eastman.

If necessary oxidation inhibitors can be added to the oil or oils.

Butylahydroxyanisole (BHA), butylhydroxytoluol (BHT) and tert-butylhydroquinone (TBHQ) are commonly used as antioxidant.

In the liquid to be used as dielectric fluid object of the present invention the antioxidants listed above are used individually or in a mixture one with the other, with percentages ranging from 0,1 to 2%.

Tert-butylhydroquinone (TBHQ) is specifically used.

TBHQ is added in an amount ranging from 0,1 to 0,5%, particularly 0,3%.

The oxidation stability of the oil, according to standard IEC 61125 at 48 hours, is defined by AOM or OSI methods, known in the prior art.

The provision of oxidation inhibitors is not always necessary since the oxidation process may be not critical thanks to the use of the dielectric fluid in an insulated environment, not in contact with air.

The copper is constantly provided in electrical transformers. Despite good performances the voltage transformation always produces heat which is transferred to the present fluid due to the contact with the copper: such condition is particularly harmful for the fluid since the copper is known to have a good catalytic effect on the oxidation. Thus it results that it is necessary to add to the oil or oils also copper inhibitors such to reduce the oxidative catalysis effect of copper in the electrical apparatuses.

The additives that are used are the benzotriazole derivatives and are available on the market.

The fact of adding one or more benzotriazole derivatives is efficacious even if they are added in small percentages to the electrical insulating and cooling fluid.

In the liquid to be used as dielectric fluid object of the present invention copper inhibitors, particularly the inhibitors described above, such as substituted triazole, are used individually or in a mixture one with the other, with percentages lower than 0,5% in particular 0,1%.

In order to meet enviromental conditions wherein dielectric fluid operate, it is necessary also to add pour point depressants.

Commercially available products can be used which are compatible with vegetable oils.

An amount ranging from 0,1 to 1,5% of at least one pour point depressant is added to the mixture of one or more oils.

Low percentages are enough for bringing down the pour point for example from -10 to -15 °C.

The pour point depressant can be polymethacrylate (EMA) .

In particular it is possible to add Viscoplex® 10- 310 by Rohmax company, specifically an amount equal to 1% of the bulk.

With reference to the standard operating conditions of a transformer, the possibilities that the dielectric fluid can absorb water and/or moisture of the air are practically negligible. However in special cases if the transformer is operating under extreme loading conditions, pyrolysis events cannot be excluded due to electric discharge arcs .

The phenomenon can thus generate neoformation acidity and moisture. In these cases it is advantageous to previously add to the mixture of oils object of the present invention a certain amount of at least a moisture and acidity regulator which actually chemically inactivates two potential dangers able to seriously compromise the operation of the transformer.

Therefore a carbamide in percentages ranging from 0,3% to 1,5% is further added as an additive to the mixture of oils to be used as dielectric fluid.

In particular ADDITIN ® RC 8500 by RheinChemie is added, specifically an amount of 0,8% of the bulk.

According to the present invention one or more vegetable oils, in particular a mixture of oils wherein the total percentage of oleic acid is less than 75%, preferably less than or equal to 74%, are used for producing a composition of one or more oils with chemical/physical properties which make it suitable for producing a dielectric fluid, by adding one or more additives .

The present invention relates therefore to dielectric fluids and to the use of said fluids for insulating and cooling components of said electrical apparatuses.

The present invention relates also to a method for preparing a composition comprising one or more vegetable oils according to claim 16.

The term RDB vegetable oil means a vegetable oil that has been refined, bleached and deodorized according to known techniques .

Said RDB oils are known in the prior art.

Such vegetable oils can be treated during the refining process with particular methods in order to obtain oils suitable to be used according to the present invention that is in order to remove contaminants that can compromise the use as dielectric fluids .

Oils are purified so as they can be used in electrical apparatuses.

In particular all the non-oil fractions provided in crude oils can be removed by natural or synthetic silica in combination with filtration aids.

The refining of the vegetable oil provides:
- extraction of the oil from seeds by means of solvents or physical means;
   degumming for removing from the compound the gum fibres, complex carbohydrates, phospholipids;
   deacidification by caustic soda in order to lower the acidity;
   bleaching by bleaching earths in order to remove clorophyl and betacarotene pigments , and possible soap residues of substances formed in the previous steps;
- filtration by means of filter press or the like to remove earths. Some neoformation molecules which can be formed during the refining process, such as soaps of alkaline earth metals, and in particular sodium or potassium soaps, are almost all retained by additive bleaching earths (TDA),
- deodorization , by vacuum distillation at 240- 270°C, in order to remove the last aromatic substances, the last free fatty acids and some molecules generated by the previous steps. This step is necessary in order to obtain by a physical means, values of the acid number N.A. which are particularly small or anyway always less than 0,1.

Said value is particularly important for the application purposes provided for said oils.

A fair amount of molecules escaped from the filtration system are still present within the oil, making it necessary to seize them through silicons and an additional filtration process, by means of which almost all the substances are retained.

The method according to the present invention provides from 1 to 3% of synthetic silica, of the Grace® type, to be added downstream of the known deodorization treatment.

The treatment by synthetic silica occurs at temperatures ranging from 80 to 100 °C into an agitated reactor and with a residual pressure level less than 50 mbar, such to make the system as anhydrous and consequently to make it particularly active for removing undesired substances that is particles deriving from the processing of oils in order to obtain RDB oils

After the silica treatment there is at least a step for filtrating said oil by silica preferably through one or more filter papers having different retention efficiency rates.

At the end of said treatments the oil or the mixture of oils is again tested as regards the parameter of the contamination of foreign particles in the oil .

In particular by means of a laser particle-counter which measures the amount and size of particles or molecules a class is given to the oil according to the standard NAS 1638.

If the oil is within high NAS classes the oil is further filtrated by means of filter papers with a more and more fine rate, without adding again silica.

In particular there is provided at least an additional filtration step by means of one or more filter papers having different retention efficiency rates, that is filter papers more and more selective or fine, such to increase the retention efficiency at each filtration step.

This treatment to which the vegetable oil is subjected guarantees the high purity of the dielectric fluid prepared with the mixture of oils object of the present invention since it allows undesired substances to be removed such as organometallic molecules and water .

The oil prepared in this way will not produce deposits, which often occur also with refined oils. According to the present invention the composition of one or more oils obtained by the method object of the present invention belongs to a NAS class, according to standard NAS 1638, always lower than class 7.

Moreover the composition of one or more oils obtained with the method object of the present invention has a water content less than 100 ppm.

According to one aspect of the present invention the dielectric fluid comprises a mixture of high oleic sunflower oil and macadamia nut oil.

Said mixture can have a high oleic sunflower oil content ranging from 40% to 90% and a macadamia nut oil content ranging from 10% to 60%.

Preferably the macadamia nut oil content is not more than 35%.

According to one aspect of the present invention the mixture has a high oleic sunflower oil content of 74% and a macadamia nut oil content of 26% and said mixture has an oleic acid C18:1 content of about 74% and a palmitoleic acid C16:1 content of about 7%.

Said dielectric fluid, which comprises a mixture of high oleic sunflower oil and macadamia nut oil, has at least one of the following properties:
a dielectric strength, according to the analytical method IEC 60156, of at least 35 KV, in particular 43,3 KV,
a dissipation factor, according to the analytical method ASTM D924, less than 0,04% at 25°C, in particular 0,004% at 25°C,

- a pour point, according to the analytical method ASTM D97, of at least -17°C,
   a flash point, according to the analytical method AOCS Tnla-64, of at least 250°C, in particular of 325°C,
- an acid number, according to the analytical method AOCS Cd3d-63, of 0,05 mgKOH/g,
- a viscosity, according to the analytical method ASTM D7042, of about 41,8 cSt at 40°C,
- an electric conductivity less than 1 pS/m at 25 °C in particular 0,15 pS/m or a lower one.

According to a further aspect of the present invention, the dielectric fluid comprises a mixture of hazel nut oil and macadamia oil.

Said mixture has a hazelnut oil content ranging from 40% to 90% and a macadamia nut oil content ranging from 10% to 60%.

Preferably the macadamia nut oil content is not more than 35%.

According to the present invention the mixture has a hazelnut oil content of 74% and a macadamia nut oil content of 26% and said mixture has an oleic acid C18:1 content of about 74% and a palmitoleic acid C16:1 content of about 7%.

Said dielectric fluid, which comprises a mixture of hazelnut oil and macadamia nut oil, has at least one of the following properties:
a dielectric strength, according to the analytical method IEC 60156, of at least 35 KV, in particular 85,6 KV,
   - a dissipation factor, according to the analytical method ASTM D924, less than 0,04% at 25°C, in particular 0,02% at 25°C,
   - a pour point, according to the analytical method ASTM D97, of at least -16°C,
   - a flash point, according to the analytical method AOCS Tnla-64, of at least 250°C, in particular of 305°C,
an acid number, according to the analytical method AOCS Cd3d-63, of 0,05 mgKOH/g,
   - a viscosity, according to the analytical method ASTM D7042, of about 41 cSt at 40°C,
   - an electrical conductivity less than 1 pS/m at 25 °C in particular 0,15 pS/m or a lower one.

The dielectric fluids described above can contain one or more additives, preferably a mixture of the following additives:
tert-butylhydroquinone (TBHQ) in an amount ranging from 0,1 to 0,5%, in particular 0,3% as the antioxidant additive,
   - substituted benzotriazole in an amount ranging from 0,1 to 0,5%, in particular 0,1% as the copper inhibitor,
   - polymethacrylate , in particular Viscolpex ® 10- 319 in an amount ranging from 0,1 to 1,5%, in particular 1% as the pour point depressant,
carbamide RC 8500 ® in an amount ranging from 0,3 to 1,5%, in particular 0,8% as the moisture and acidity regulator.

### EXAMPLE 1

A mixture of RDB refined (that is refined, bleached and deodorized) oils containing 74% of hazelnut oil and 26% of macadamia oil is analyzed by a PODS (Portable Oil Diagnostic System) laser particle-counter by Hach Ultra Analytics USA.

According to the standard NAS 1638 the mixture is classified as class 6.

The amount of contaminants provided in 100 ml of the mixture of oils therefore is 16000 particles from 5 to 15 micron, 2850 particles from 15 to 25 micron, 506 particles from 25 to 50 micron, 90 particles from 50 to 100 micron, 16 particles above 100 micron.

Since it is not possible to classify the origin and the composition of each individual particle, due to the fact that the "non-oil" substances, that is substances which are part of an oil but are not triglycerides, except for additives, provided in the dielectric fluid are a potential reason for a lowering in the dielectric properties, the mixture of vegetable oils is subjected to a treatment by synthetic silica of the Grace® type or the like as described above.

After the filtration the mixture is again analyzed by the laser particle-counter and it is classified as class 4 according to the standard NAS 1638.

The amounts of contaminants present in 100 ml of the mixture of oils therefore is 4000 particles from 5 to 15 micron, 712 particles from 15 to 25 micron, 126 particles from 25 to 50 micron, 22 particles from 50 to 100 micron, 4 particles above 100 micron.

### EXAMPLE 2

A mixture of refined RDB (refined, bleached and deodorized) oils containing 74% of hazelnut oil and 26% of macadamia nut oil is analyzed by a PODS (portable Oil Diagnostic System) laser particle-counter by Hach Ultra Analytics USA.

According to the standard NAS 1638 the mixture is classified as class 7.

The electrical conductivity is also measured and it is equal to 0,75 pS/m.

The mixture is subjected to filtration as described in the example 1.

The mixture is subjected to a further filtration according to the example 1.

After the second filtration the mixture is again analyzed with the laser particle-counter and according to the standard NAS 1638 it is classified as class 3 while the electrical conductivity measured is equal to 0,15 pS/m.

These examples show that RDB oils treated with synthetic silica and subjected to one preferably to several filtrations, improve their NAS class: the filtration allows further amounts of particulate, made of organometallic molecules and water to be retained. As a consequence also the value of the electrical conductivity improves and makes it possible to use this mixture of oils as a dielectric fluid.

### EXAMPLE 3

A mixture of refined RDB (refined, bleached and deodorized) oils containing 74% of hazelnut oil and 26% of macadamia nut oil treated as in the example 2 is analyzed.

Especially the value of the acid number according to AOCS Cd3d-63 method, the viscosity value according to ASTM D7042 method are analytically measured.

The acid number is 0,05.

The viscosity at 40°C is 41,0 cSt.

The same mixture is subjected to the oxidation test by Rancimat 617 Methron apparatus according to IEC 61125 method.

At the end of the test the values of the acid number and viscosity are again tested as follows:

| Test length | Acid number (mgKOH/g) | Viscosity (cSt) |
|---|---|---|
| 48H | 12,3 | 174,3 |

### EXAMPLE 4

Antioxidants, copper inhibitors, pour point depressants and a moisture and acidity regulator are added to a mixture of refined RDB (refined, bleached and deodorized) oils containing 74% of hazelnut oil and 26% of macadamia nut oil treated as in the example 2.

As the antioxidant one of the following compounds is typically used: butylhydroxyanisole (BHA), butylhydroxytoluol (BHT) and tert-butylhydroquinone (TBHQ).

As copper inhibitors benzotriazoles are typically used.

As pour point depressants polymethacrylates are typically used.

As acidity and moisture regulator a carbamide is typically used.

In particularly the tert-butylhydroquinone (TBHQ) by Eastman company in an amount ranging from 0,1 to 0,5%, in particular 0,3 % is used as the antioxidant.

The substituted benzotriazole by Lubrizol company in an amount ranging from 0,1 to 0,5% in particular 0,1% is used as the copper inhibitor.

Viscoplex 10-319 by Rhomax in an amount ranging from 0,1 to 1,5 %, particularly 1% is used as pour point depressant.

The compound RC 8500 by Rheinchemie company in an amount ranging from 0,3% to 1,5%, particularly 0,8% is used as the acidity and moisture regulator.

The mixture of oils with the additives is analytically tested in order to define the value of the acid number according to AOCS Cd3d-63 method and the viscosity value according to ASTM D7042 method.

The acid number is 0,05.

Viscosity at 40°C is 41 cSt.

The same mixture is subjected to the oxidation test by Rancimat 617 Metrohm apparatus according to IEC 61125 method.

At the end of the test the values of the acid number and viscosity are again tested as follows:

| Test length | Acid number (mgKOH/g) | Viscosity (cSt) |
|---|---|---|
| 48H | 0,20 | 41,9 |
| 164H | 0,29 | 42,4 |

### EXAMPLE 5

A mixture of oils comprising 74% of high oleic sunflower oil and 26% of macadamia nut oil is treated and filtrated as described above and then at least a copper inhibitor and at least an antioxidant as in the example 4 are added thereto.

The mixture of oils is analytically tested as regards the value of the acid number according to AOCS Cd3d-63 method and as regards the viscosity value according to ASTM D7042 method.

The acid number is 0,05.

The viscosity at 40°C is 41,8 cSt.

The same mixture is subjected to the oxidation test by Rancimat 617 Methrom apparatus according to IEC 61125 method.

At the end of the test the values of the acid number and viscosity are again tested as follows:

| Test length | Acid number (mgKOH/g) | Viscosity (cSt) |
|---|---|---|
| 48H | 0,30 | 43,2 |

The chemical physical characteristics of the dielectric fluids composed of a mixture of hazelnut oil and macadamia nut oil and of a mixture of high oleic sunflower oil and macadamia nut oil are shown below.

| | ANALYTICAL METHOD | Unit of measure | Hazelnut-macadamia nut | High oleic sunflower-macadamia nut |
|---|---|---|---|---|
| Dielectric strength | IEC 60156 | kV | 85.6 | 43.3 |
| Dissipation factor 25°C | ASTM D924 | % | 0.02 | 0.004 |
| Pour point | ASTM D97 | °C | -16 | -17 |
| Flash point | AOCS Tn1a-64 | °C | 305 | 325 |
| Acid number | AOCS Cd3d-63 | mgKOH/g | 0.05 | 0.05 |

Obviously the fluid object of the present invention can be used in any apparatus wherein a cooling and/or insulating fluid with the characteristics described above is required.

## Claims

1. Use of a composition comprising one or more vegetable oils, said oils being triglycerides of natural origin as dielectric fluid, **characterized in that**
- said composition has
(i) an oleic acid (C18:1) content less than 75%, preferably less than or equal to 74%,
(ii) a palmito leic acid (C16:1) content ranging from 1% to 25%, preferably more than 2%,
(iii) a linolenic acid (C18:3) content less than 0.5%; and
- **in that** the composition belongs to a NAS class lower than class 7, according to NAS 1638 standard.

2. The use according to claim 1 **characterized in that** the composition has a water content of less than 100 ppm.

3. The use according to claim 1 or 2, **characterized in that** the composition comprises hazelnut oil, macadamia nut oil, MCT (medium chain triglycerides) oil physically extracted from chemically unmodified coconut oil, high oleic sunflower, said oils being provided individually or in a mixture of two or more oils.

4. A dielectric fluid composition comprising one or more vegetable oils, said oils being triglycerides of natural origin, wherein
- said composition has
(i) an oleic acid (C18:1) content less than 75%, preferably less than or equal to 74%,
(ii) a palmitoleic acid (C16:1) content ranging from 1% to 25%, preferably more than 2%,
(iii) a linolenic acid (C18:3) content less than 0.5% ; **characterized in that** it comprises:
- a mixture of high oleic sunflower oil and macadamia nut oil, wherein the high oleic sunflower oil content ranges from 40% to 90% and the macadamia nut oil content ranges from 10% to 60%, preferably the macadamia nut oil content being not more than 35%, or
- a mixture of hazelnut oil and macadamia nut oil, wherein the hazelnut oil content ranges from 40% to 90% and the macadamia nut oil content ranges from 10% to 60%, preferably the macadamia nut oil content being not more than 35%.

5. A dielectric fluid composition comprising one or more vegetable oils, said oils being triglycerides of natural origin as dielectric fluid, wherein
- said composition has
(i) an oleic acid (C18:1) content less than 75%, preferably less than or equal to 74%,
(ii) a palmito leic acid (C16:1) content ranging from 1% to 25%, preferably more than 2%,
(iii) a linolenic acid (C18:3) content less than 0.5%
, **characterized in that** it comprises:
- a mixture of high oleic sunflower oil and MCT oil, wherein the high oleic sunflower oil content ranges from 60% to 95% and the MCT oil content ranges from 5% to 40% or
- a mixture of hazelnut oil and MCT oil, wherein the hazelnut oil content ranges from 60% to 95% and the MCT oil content ranges from 5% to 40%.

6. Composition according to claim 4, **characterized in that** said mixture has a high oleic sunflower oil content or hazelnut oil content of 74% and a macadamia nut oil content of 26% which mixture has an oleic acid (C18:1) content of about 74% and a palmitoleic acid (C16:1) content of about 7%.

7. Composition according to claim 5, **characterized in that** said mixture has a high oleic sunflower oil content or hazelnut oil content of 90% and a MCT oil content of 10% which mixture has an oleic acid (C18:1) content of about 74%.

8. Composition according to one or more of the preceding claims 4 to 7, **characterized in that** at least a further oil preferably selected among high oleic sunflower oil, hazelnut oil, macadamia nut oil, MCT (medium chain triglycerides) oil physically extracted from chemically unmodified coconut oil is added to the mixtures made of two oils.

9. Dielectric fluid composition according to one or more of claims 4 to 8 further comprising at least one additive selected from an antioxidant additive, a copper inhibitor, a pour point depressant and a moisture and acidity regulator, or a mixture thereof, wherein the additive content is always less than 5%.

10. Dielectric fluid according to claim 9, **characterized in that** it has one or more of the following physical characteristics:
- a dielectric strength, according to the analytical method IEC 60156, of at least 35 KV, in particular more than 40 KV,
- a dissipation factor, according to the analytical method ASTM D924, less than 0,04% at 25°C, in particular less than 0,02% at 25°C,
- a pour point, according to the analytical method ASTM D97, of at least -17°C,
- a flash point, according to the analytical method AOCS Tnla-64, of at least 250°C, in particular of at least 300°C,
- an acid number, according to the analytical method AOCS Cd3d-63, less than or equal to 0,05 mgKOH/g,
- a viscosity, according to the analytical method ASTM D7042, ranging from 35 to 42 cSt at 40°C,
- an electrical conductivity less than 1 pS/m at 25°C in particular 0,15 pS/m or a lower one.

11. Dielectric fluid according to claim 9 or 10, **characterized in that** it comprises one or more antioxidant additives in amounts ranging from 0.1% to 2% selected from the group consisting of butylhydroxyanisole (BHA), butylhydroxytoluol (BHT) and tert-butylhydroquinone (TBHQ), said additive being preferably tert-butylhydroquinone (TBHQ) in an amount ranging from 0.1 to 0.5%, preferably 0.3%.

12. Dielectric fluid according to claim 9 or 10, **characterized in that** it comprises:
- one or more benzotriazole derivative as copper inhibitors in a percentage lower than 0.5%, preferably 0.1%, or
- at least a pour point depressant such as polymethacrylate (PMA) in an amount ranging from 0.1% to 1.5%, or
- at least a moisture and acidity regulator, such as a carbamide, in an amount ranging from 0.3% to 1.5%.

13. Dielectric fluid composition according to one or more of the preceding claims 9 to 12 **characterized in that** it comprises a mixture of high oleic sunflower oil and macadamia nut oil, and which dielectric fluid has at least one of the following properties:
- a dielectric strength, according to the analytical method IEC 60156, of at least 35 KV, in particular 43.3 KV,
- a dissipation factor, according to the analytical method ASTM D924 , less than 0,04% at 25°C, in particular 0,004% at 25°C,
- a pour point, according to the analytical method ASTM D97, of at least -17°C,
- a flash point, according to the analytical method AOCS Tnla-64, of at least 250°C, in particular of 325°C,
- an acid number, according to the analytical method AOCS Cd3d-63, of 0.05 mgKOH/g,
- a viscosity, according to the analytical method ASTM D7042, of about 41.8 cSt at 40°C,
- an electric conductivity less than 1 pS/m at 25°C in particular 0.15 pS/m or a lower one.

14. Dielectric fluid according to one or more of the preceding claims 9 to 12 **characterized in that** it comprises a mixture of hazelnut oil and macadamia nut oil, and which dielectric fluid has at least one of the following properties:
- a dielectric strength, according to the analytical method IEC 60156, of at least 35 KV, in particular 85.6 KV,
- a dissipation factor, according to the analytical method ASTM D92 , less than 0.04% at 25°C, in particular 0.02% at 25°C,
- a pour point, according to the analytical method ASTM D97, of at least -16°C,
- a flash point, according to the analytical method AOCS Tnla-64, of at least 250°C, in particular of 305°C,
- an acid number, according to the analytical method AOCS Cd3d-63, of 0.05 mgKOH/g,
- a viscosity, according to the analytical method ASTM D7042, of about 41 cSt at 40°C,
- an electrical conductivity less than 1 pS/m at 25 °C in particular 0.15 pS/m or a lower one.

15. Dielectric fluid according to claim 13 or 14 **characterized in that** it comprises a mixture of one or more additives, such as:
- tert-butylhydroquinone (TBHQ) in an amount ranging from 0.1 to 0.5%, in particular 0.3% as the antioxidant additive,
- substituted benzotriazole in an amount ranging from 0.1 to 0.5%, in particular 0.1% as the copper inhibitor,
- polymethacrylate, in particular Viscoplex (R) 10-319 in an amount ranging from 0.1 to 1.5%, in particular 1% as the pour point depressant,
- carbamide RC 8500 (R) in an amount ranging from 0.3 to 1.5%, in particular 0.8% as the moisture and acidity regulator.

16. Method for preparing a composition according to one or more of claims 4-8, the method providing the treatment of at least a refined, bleached and deodorized (RDB) oil, comprising the following steps :
- adding to the RDB oil or mixture of RDB oils synthetic silica in an amount ranging from 1% to 3% into an agitated reactor at a temperature ranging from 80 to 100°C and with a residual pressure level of less than 50 mbar,
- at least a filtration, preferably performed through one or more filter papers having different retention efficiency rates, such to retain undesired substances such as organometallic molecules and water.

17. Method according to claim 16 further comprising the following steps:
- a qualitative analysis of the oil or mixture of oils, in particular a measurement of the amount and size of the particles present into the oil or in the mixture of oils in order to define the class to which it belongs according to the NAS 1638 standard,
- at least one further filtration step by means of one or more filter papers having different retention efficiency rates such to increase the retention efficiency at each filtration step, wherein said at least one further filtration step does not provide further synthetic silica to be added.

## Patentansprüche

1. Verwendung eines Gemischs, welches als dielektrisches Medium ein oder mehrere pflanzliche Öle umfasst, wobei die genannten Öle Triglyceride natürlichen Ursprungs sind und das Gemisch **dadurch gekennzeichnet ist, dass**
- das genannte Gemisch
(i) einen Gehalt an Ölsäure (C18:1) von weniger als 75 %, vorzugsweise von weniger als oder gleich 74 %,
(ii) einen Gehalt an Palmitoleinsäure (C16:1) im Bereich von 1 % bis 25 %, vorzugsweise von mehr als 2 %,
(iii) einen Gehalt an Linolensäure (C18:3) von weniger als 0,5 %,
aufweist und dass
- das genannte Gemisch gemäß NAS-Standard 1638 zu einer NAS-Klasse unterhalb von 7 gehört.

2. Verwendung nach Anspruch 1, **dadurch gekennzeichnet, dass** das Gemisch einen Wasseranteil von weniger als 100 ppm aufweist.

3. Verwendung nach Anspruch 1 oder 2, **dadurch gekennzeichnet, dass** das genannte Gemisch Haselnussöl, Makadamianussöl, Öl aus Triglyceriden mittlerer Kettenlänge (MCT), welches physikalisch aus chemisch unmodifiziertem Kokosnussöl extrahiert worden ist, und Sonnenblumenöl mit hohem Ölsäuregehalt umfasst, wobei die genannten Öle einzeln oder in einer Mischung von zwei oder mehr als zwei Ölen vorliegen.

4. Dielektrisches Mediengemisch, welches ein oder mehrere pflanzliche Öle umfasst, wobei die genannten Öle Triglyceride natürlichen Ursprungs sind und wobei
- das genannte Gemisch
(i) einen Gehalt an Ölsäure (C18:1) von weniger als 75 %, vorzugsweise von weniger als oder gleich 74 %,
(ii) einen Gehalt an Palmitoleinsäure (C16:1) im Bereich von 1 % bis 25 %, vorzugsweise von mehr als 2 %,
(iii) einen Gehalt an Linolensäure (C18:3) von weniger als 0,5 %,
aufweist und **dadurch gekennzeichnet, dass** es umfasst:
- eine Mischung aus Sonnenblumenöl mit hohem Ölsäuregehalt und Makadamianussöl, wobei der Gehalt an Sonnenblumenöl mit hohem Ölsäuregehalt im Bereich von 40 % bis 90 % liegt und der Gehalt an Makadamianussöl im Bereich von 10 % bis 60 % liegt, wobei der Gehalt an Macadamianussöl vorzugsweise nicht höher als 35 % ist, oder
- eine Mischung aus Haselnussöl und Macadamianussöl, wobei der Gehalt an Haselnussöl im Bereich von 40 % bis 90 % liegt und der Gehalt an Macadamianussöl im Bereich von 10 % bis 60 % liegt, wobei der Gehalt an Macadamianussöl vorzugsweise nicht höher als 35 % ist

5. Dielektrisches Mediengemisch, welches als dielektrisches Medium ein oder mehrere pflanzliche Öle umfasst, wobei die genannten Öle Triglyceride natürlichen Ursprungs sind und wobei
- das genannte Gemisch
(i) einen Gehalt an Ölsäure (C18:1) von weniger als 75 %, vorzugsweise von weniger als oder gleich 74 %
(ii) einen Gehalt an Palmitoleinsäure (C16:1) im Bereich von 1 % bis 25 %, vorzugsweise von mehr als 2 %,
(iii) einen Gehalt an Linolensäure (C18:3) von weniger als 0,5 %
aufweist und **dadurch gekennzeichnet, dass** es umfasst:
- eine Mischung aus Sonnenblumenöl mit hohem Ölsäuregehalt und MCT-Öl, wobei der Gehalt an Sonnenblumenöl mit hohem Ölsäuregehalt im Bereich von 60 % bis 95 % liegt und der Gehalt an MCT-Öl im Bereich von 5 % bis 40 % liegt, oder
- eine Mischung aus Haselnussöl und MCT-Öl, wobei der Gehalt an Haselnussöl im Bereich von 60 % bis 95 % liegt und der Gehalt an MCT-Öl im Bereich von 5 % bis 40 % liegt.

6. Gemisch nach Anspruch 4, **dadurch gekennzeichnet, dass** die genannte Mischung einen Gehalt an Sonnenblumenöl mit hohem Ölsäuregehalt oder einen Gehalt an Haselnussöl von 74 % und einen Gehalt an Macadamianussöl von 26 % aufweist, wobei diese Mischung einen Gehalt an Ölsäure (C18:1) von etwa 74 % und einen Gehalt an Palmitoleinsäure (16:1) von etwa 7 % aufweist.

7. Gemisch nach Anspruch 5, **dadurch gekennzeichnet, dass** das genannte Gemisch einen Gehalt an Sonnenblumenöl mit hohem Ölsäuregehalt oder einen Gehalt an Haselnussöl von 90 % und einen Gehalt an MCT-Öl von 10 % aufweist, wobei dieses Gemisch einen Gehalt an Ölsäure (C18:1) von etwa 74 % aufweist.

8. Gemisch nach einem oder mehreren der vorangehenden Ansprüche 4 bis 7, **dadurch gekennzeichnet, dass** den aus zwei Ölen gefertigten Gemischen mindestens ein weiteres Öl zugesetzt wird, welches vorzugsweise aus der Gruppe ausgewählt wird, die aus Sonnenblumenöl mit hohem Ölsäuregehalt, Haselnussöl, Macadamianussöl und MCT-Öl, welches physikalisch aus chemisch unmodifiziertem Kokosnussöl extrahiert wird, besteht.

9. Dielektrisches Mediengemisch nach einem oder mehreren der Ansprüche 4 bis 8, welches mindestens einen Zusatzstoff umfasst, welcher aus der Gruppe ausgewählt wird die aus einem Antioxidationsmittel, einem Kupferinhibitor, einem Pourpoint-Depressor und einem Feuchtigkeits- und Säuregradregulator oder einer Mischung aus diesen besteht, wobei der Gehalt an Zusatzstoff stets unter 5 % liegt.

10. Dielektrisches Mediengemisch nach Anspruch 9, **dadurch gekennzeichnet, dass** es eine oder mehrere der folgenden physikalischen Kenngrößen aufweist:
- eine Durchschlagsfestigkeit nach dem Untersuchungsverfahren IEC 60156 von mindestens 35 kV, insbesondere über 40 kV,
- einen Verlustfaktor gemäß dem Untersuchungsverfahren ASTM D924 von kleiner als 0,04 % bei 25 °C, insbesondere kleiner als 0,02 % bei 25 °C,
- einen Pourpoint gemäß dem Untersuchungsverfahren ASTM D97 von mindestens -17 °C,
- einen Flammpunkt gemäß dem Untersuchungsverfahren AOCS Tn1a-64 von mindestens 250 °C, insbesondere von mindestens 300 °C,
- eine Säurezahl gemäß dem Untersuchungsverfahren AOCS Cd3d-63 kleiner oder gleich 0,05 mg KOH pro Gramm,
- eine Viskosität gemäß dem Untersuchungsverfahren ASTM D7042 im Bereich von 35 bis 42 cSt bei 40 °C,
- eine elektrische Leitfähigkeit von weniger als 1 pS/m bei 25 °C, insbesondere 0,15 pS/m oder darunter.

11. Dielektrisches Medium nach Anspruch 9 oder 10, **dadurch gekennzeichnet, dass** es ein oder mehrere Antioxidationsmittel in Mengen im Bereich von 0,1 % bis 2 % umfasst, welche aus der Gruppe ausgewählt werden, die aus Butylhydroxyanisol (BHA), Butylhydroxytoluol (BHT) und tertiärem Butylhydroquinon (TBHQ) besteht, wobei der genannte Zusatzstoff vorzugsweise tertiäres Butylhydroquinon (TBHQ) in einer Menge im Bereich von 0,1 bis 0,5 %, vorzugsweise 0,3 % ist.

12. Dielektrisches Medium nach Anspruch 9 oder 10, **dadurch gekennzeichnet, dass** es
- ein oder mehrere Benzotriazolderivate als Kupferinhibitoren in einem prozentualen Gehalt von weniger als 0,4 %, vorzugsweise von weniger als 0,1 % oder
- mindestens einen Pourpoint-Depressor wie beispielsweise Polymethacrylat (PMA) in einer Menge im Bereich von 0,1 % bis 1,5 % oder
- mindestens einen Feuchtigkeits- und Säuregradregulator wie beispielsweise Carbamid in einer Menge im Bereich von 0,3 % bis 1,5 % umfasst.

13. Dielektrisches Mediengemisch nach einem oder mehreren der vorangehenden Ansprüche 9 bis 12, **dadurch gekennzeichnet, dass** es eine Mischung aus Sonnenblumenöl mit hohem Säuregrad und Macadamianussöl umfasst, wobei dieses dielektrische Medium mindestens eine der folgenden Eigenschaften aufweist:
- eine Durchschlagsfestigkeit nach dem Untersuchungsverfahren IEC 60156 von mindestens 35 kV, insbesondere 43,3 kV,
- einen Verlustfaktor gemäß dem Untersuchungsverfahren ASTM D924 von kleiner als 0,04 % bei 25 °C, insbesondere 0,004 % bei 25 °C,
- einen Pourpoint gemäß dem Untersuchungsverfahren ASTM D97 von mindestens -17 °C,
- einen Flammpunkt gemäß dem Untersuchungsverfahren AOCS Tn1a-64 von mindestens 250 °C, insbesondere 325 °C,
- eine Säurezahl gemäß dem Untersuchungsverfahren AOCS Cd3d-63 von 0,05 mg KOH pro Gramm,
- eine Viskosität gemäß dem Untersuchungsverfahren ASTM D7042 von etwa 41,8 cSt bei 40 °C,
- eine elektrische Leitfähigkeit von weniger als 1 pS/m bei 25 °C, insbesondere 0,15 pS/m oder eine darunter liegende.

14. Dielektrisches Medium nach einem oder mehreren der vorangehenden Ansprüche 9 bis 12, **dadurch gekennzeichnet, dass** es eine Mischung aus Haselnussöl und Macadamianussöl umfasst und dieses dielektrische Medium mindestens eine der folgenden Eigenschaften aufweist:
- eine Durchschlagsfestigkeit nach dem Untersuchungsverfahren IEC 60156 von mindestens 35 kV, insbesondere 85,6 kV,
- einen Verlustfaktor gemäß dem Untersuchungsverfahren ASTM D924 von kleiner als 0,04 % bei 25 °C, insbesondere kleiner als 0,02 % bei 25 °C,
- einen Pourpoint gemäß dem Untersuchungsverfahren ASTM D97 von mindestens -16 °C,
- einen Flammpunkt gemäß dem Untersuchungsverfahren AOCS Tn1a-64 von mindestens 250 °C, insbesondere 305 °C,
- eine Säurezahl gemäß dem Untersuchungsverfahren AOCS Cd3d-63 von 0,05 mg KOH pro Gramm,
- eine Viskosität gemäß dem Untersuchungsverfahren ASTM D7042 von etwa 41 cSt bei 40 °C,
- eine elektrische Leitfähigkeit von weniger als 1 pS/m bei 25 °C, insbesondere 0,15 pS/m oder eine darunter liegende.

15. Dielektrisches Medium nach Anspruch 13 oder 14, **dadurch gekennzeichnet, dass** es eine Mischung aus einem oder mehreren Zusatzstoffen umfasst wie beispielsweise aus:
- tertiärem Butylhydroquinon (TBHQ) in einer Menge im Bereich von 0,1 bis 0,5 %, insbesondere 0,3 %, als das Antioxidationsmittel,
- substituiertem Benzotriazol in einem Bereich von 0,1 bis 0,5 %, insbesondere 0,1 %, als der Kupferinhibitor,
- Polymethacrylat, insbesondere Viscoplay® 10-319, in einer Menge im Bereich von 0,1 bis 1,5 %, insbesondere 1 %, als der Pourpoint-Depressor,
- Carbamid RC 8500® in einem Bereich von 0,3 bis 1,5 %, insbesondere 0,8 %, als der Feuchtigkeits- und Säuregradregulator.

16. Verfahren zur Herstellung eines Gemischs nach einem oder mehreren der Ansprüche 4 bis 8 , wobei dieses Verfahren die Behandlung von mindestens einem raffinierten, gebleichten und desodorisieren Öl (RDB-Öl) beinhaltet und welches die folgenden Schritte umfasst:
- die Zugabe von synthetischem Silikatmaterial in einer Menge im Bereich von 1 % bis 3 % zum RDB-Öl oder zu einer Mischung aus RDB-Ölen in einen Rührkesselreaktor bei einer Temperatur im Bereich von 80 bis 100 °C und einem Restdruckpegel von weniger als 50 mbar,
- mindestens eine Filtration, welche vorzugsweise durch ein oder mehrere Filterpapiere erfolgt, die unterschiedliche Raten ihrer Rückhalteleistung dergestalt aufweisen, dass unerwünschte Substanzen wie beispielsweise organometallische Moleküle und Wasser zurückgehalten werden.

17. Verfahren nach Anspruch 16, welches außerdem die folgenden Schritte umfasst:
- eine qualitative Analyse des Öls oder der Mischung von Ölen, insbesondere eine Messung der Menge und der Größe der im Öl oder in der Mischung von Ölen befindlichen Teilchen, um die Klasse festzulegen, der es gemäß dem Standard NAS 1638 angehört,
- mindestens einen weiteren Filtrationsschritt mit Hilfe von einem oder mehreren Filterpapieren, welche unterschiedliche Raten ihrer Rückhalteleistung dergestalt aufweisen, dass die Rückhalteleistung bei jedem Filtrationsschritt erhöht wird, wobei der genannte mindestens eine weitere Filtrationsschritt nicht beinhaltet, dass weiteres synthetisches Silikatmaterial zugegeben wird.

## Revendications

1. Utilisation d'une composition comprenant une ou plusieurs huiles végétales, lesdites huiles étant triglycérides d'origine naturelle en tant que fluide diélectrique, **caractérisée en ce que**
- ladite composition a
(i) une teneur en acide oléique (C18:1) inférieure à 75%, de préférence inférieure à ou égale à 74%,
(ii) une teneur en acide palmitoléique (C16:1) allant de 1% à 25%, de préférence de plus de 2%,
(iii) une teneur en acide linoléique (C18:3) inférieure à 0,5% ; et
- **en ce que** la composition appartienne à une classe NAS inférieure à la classe 7, selon le standard NAS 1638.

2. Utilisation selon la revendication 1 **caractérisée** en ce la composition a une teneur en eau inférieure à 100 ppm.

3. Utilisation selon la revendication 1 ou 2, **caractérisée en ce que** la composition comprend de l'huile de noisette, de l'huile de noix de macadamia, de l'huile de MCT (triglycérides à chaîne moyenne) physiquement extraite de l'huile de noix de coco non modifiée, de l'huile de tournesol riche en acide oléique, lesdites huiles étant fournies individuellement ou en mélange de deux ou plusieurs huiles.

4. Composition de fluide diélectrique comprenant une ou plusieurs huiles végétales, lesdites huiles étant triglycérides d'origine naturelle, où
- ladite composition a
(i) une teneur en acide oléique (C18:1) inférieure à 75%, de préférence inférieure à ou égale à 74%,
(ii) une teneur en acide palmitoléique (C16:1) allant de 1% à 25%, de préférence de plus de 2%,
(iii) une teneur en acide linoléique (C18:3) inférieure à 0,5% ; **caractérisée en ce qu'**elle comprend :
- un mélange d'huile de tournesol riche en acide oléique et d'huile de noix de macadamia, où la teneur en huile de tournesol riche en acide oléique va de 40% à 90% et la teneur en huile de noix de macadamia va de 10% à 60%, de préférence la teneur en huile de noix de macadamia n'excédant pas 35%, ou
- un mélange d'huile de noisette et d'huile de noix de macadamia, où la teneur d'huile de noisette va de 40% à 90% et la teneur en huile de noix de macadamia va de 10% à 60%, de préférence la teneur en huile de noix de macadamia n'excédant pas 35%.

5. Composition de fluide diélectrique comprenant une ou plusieurs huiles végétales, lesdites huiles étant triglycérides d'origine naturelle en tant que fluide diélectrique, où
- ladite composition a
(i) une teneur en acide oléique (C18:1) inférieure à 75%, de préférence inférieure à ou égale à 74%,
(ii) une teneur en acide palmitoléique (C16:1) allant de 1% à 25%, de préférence de plus de 2%,
(iii) une teneur en acide linoléique (C18:3) inférieure à 0,5%, **caractérisée en ce qu'**elle comprend :
- un mélange d'huile de tournesol riche en acide oléique et d'huile de MCT, où la teneur en huile de tournesol riche en acide oléique va de 60% à 95% et la teneur en huile de MCT va de 5% à 40% ou
- un mélange d'huile de noisette et d'huile de MCT, où la teneur en huile de noisette va de 60% à 95%, et la teneur en huile de MCT va de 5% à 40%.

6. Composition selon la revendication 4, **caractérisée en ce que** ledit mélange a une teneur en huile de tournesol riche en acide oléique ou une teneur en huile de noisette de 74% et une teneur en huile de noix de macadamia de 26% lequel mélange a une teneur en acide oléique (C18:1) d'environ 74% et une teneur en acide palmitoléique (C16:1) d'environ 7%.

7. Composition selon la revendication 5, **caractérisée en ce que** ledit mélange a une teneur en huile de tournesol riche en acide oléique ou une teneur en huile de noisette de 90% et une teneur en huile de MCT de 10% lequel mélange a une teneur en acide oléique (C18:1) d'environ 74%.

8. Composition selon une ou plusieurs des revendications précédentes de 4 à 7, **caractérisée en ce qu'**au moins une huile supplémentaire de préférence choisie parmi l'huile de tournesol riche en acide oléique, l'huile de noisette, l'huile de noix de macadamia, l'huile de MCT (triglycérides à chaîne moyenne) physiquement extraite de l'huile de noix de coco non modifiée est ajoutée aux mélanges composés de deux huiles.

9. Composition de fluide diélectrique selon une ou plusieurs des revendications de 4 à 8 comprenant en outre au moins un additif choisi parmi un additif antioxydant, un inhibiteur de cuivre, un abaisseur de point d'écoulement et un régulateur d'humidité et d'acidité, ou un mélange de ceux-ci, où la teneur en additif est toujours inférieure à 5%.

10. Fluide diélectrique selon la revendication 9, **caractérisé en ce que** qu'il a une ou plusieurs des caractéristiques physiques suivantes :
- une rigidité diélectrique, selon la méthode analytique IEC 60156, d'au moins 35 KV, en particulier supérieure à 40 KV,
- un facteur de dissipation, selon la méthode analytique ASTM D924, inférieur à 0,04% à 25°C, en particulier inférieur à 0,02% à 25°C,
- un point d'écoulement, selon la méthode analytique ASTM D97, d'au moins -17°C,
- un point d'inflammabilité, selon la méthode analytique AOCS Tn1a-64, d'au moins 250°C, en particulier d'au moins 300°C,
- un indice d'acidité, selon la méthode analytique AOCS Cd3d-63, inférieur à ou égal à 0,05 mgKOH/g,
- une viscosité, selon la méthode analytique ASTM D7042, allant de 35 à 42 cSt à 40°C,
- une conductivité électrique inférieure à 1 pS/m à 25°C en particulier 0,15 pS/m ou une plus basse.

11. Fluide diélectrique selon la revendication 9 ou 10, **caractérisé en ce qu'**il comprend un ou plusieurs additifs antioxydants en quantité allant de 0,1% à 2% choisi dans le groupe constitué d'hydroxyanisole butylé (BHA), de butylhydroxytoluène (BHT) et de tert-butyl-hydroquinone (TBHQ), ledit additif étant de préférence tert-butyl-hydroquinone (TBHQ) en quantité allant de 0,1% à 0,5%, de préférence 0,3%.

12. Fluide diélectrique selon la revendication 9 ou 10, **caractérisé en ce qu'**il comprend :
- un ou plusieurs dérivés benzotriazole en tant qu'inhibiteurs de cuivre en pourcentage inférieur à 0,5%, de préférence à 0,1%, ou
- au moins un abaisseur de point d'écoulement comme un polyméthacrylate (PMA) en quantité allant de 0,1% à 1,5%, ou
- au moins un régulateur d'acidité et d'humidité, comme une carbamide, en quantité allant de 0,3% à 1,5%.

13. Composition de fluide diélectrique selon une ou plusieurs des revendications précédentes de 9 à 12 **caractérisée en ce qu'**elle comprend un mélange d'huile de tournesol riche en acide oléique et une huile de noix de macadamia, et lequel fluide diélectrique a au moins une des propriétés suivantes :
- une rigidité diélectrique, selon la méthode analytique IEC 60156, d'au moins 35 KV, en particulier 43,3 KV,
- un facteur de dissipation, selon la méthode analytique ASTM D924, inférieur à 0,04% à 25°C, en particulier 0,004% à 25°C,
- un point d'écoulement, selon la méthode analytique ASTM D97, d'au moins -17°C,
- un point d'inflammabilité, selon la méthode analytique AOCS Tn1a-64, d'au moins 250°C, en particulier de 325°C,
- un indice d'acidité, selon la méthode analytique AOCS Cd3d-63, de 0,05 mgKOH/g,
- une viscosité, selon la méthode analytique ASTM D7042, d'environ 41,8 cSt à 40°C,
- une conductivité électrique inférieure à 1 pS/m à 25°C en particulier 0,15 pS/m ou une plus basse.

14. Composition de fluide diélectrique selon une ou plusieurs des revendications précédentes de 9 à 12 **caractérisée en ce qu'**elle comprend un mélange d'huile de noisette et une huile de noix de macadamia, et lequel fluide diélectrique a au moins une des propriétés suivantes :
- une rigidité diélectrique, selon la méthode analytique IEC 60156, d'au moins 35 KV, en particulier 85,6 KV,
- un facteur de dissipation, selon la méthode analytique ASTM D92, inférieur à 0,04% à 25°C, en particulier 0,02% à 25°C,
- un point d'écoulement, selon la méthode analytique ASTM D97, d'au moins -16°C,
- un point d'inflammabilité, selon la méthode analytique AOCS Tn1a-64, d'au moins 250°C, en particulier de 305°C,
- un indice d'acidité, selon la méthode analytique AOCS Cd3d-63, de 0,05 mgKOH/g,
- une viscosité, selon la méthode analytique ASTM D7042, d'environ 41 cSt à 40°C,
- une conductivité électrique inférieure à 1 pS/m à 25°C en particulier 0,15 pS/m ou une plus basse.

15. Fluide diélectrique selon la revendication 13 ou 14 **caractérisé en ce qu'**il comprend un mélange d'un ou plusieurs additifs, comme :
- tert-butyl-hydroquinone (TBHQ) en quantité allant de 0,1% à 0,5%, en particulier 0,3%, en tant qu'additif antioxydant,
- benzotriazole substitué en quantité allant de 0,1 à 0,5%, en particulier 0,1% en tant qu'inhibiteur de cuivre,
- polyméthacrylate, en particulier Viscoplex (R) 10-319 en quantité allant de 0,1 à 1,5%, en particulier 1% en tant qu'abaisseur de point d'écoulement,
- carbamide RC 8500 (R) en quantité allant de 0,3 à 1,5%, en particulier 0,8% en tant que régulateur d'acidité et d'humidité.

16. Méthode pour la préparation d'une composition selon une ou plusieurs des revendications de 4 à 8, la méthode fournissant le traitement d'au moins une huile (RDB) raffinée, blanchie et désodorisée, comprenant les étapes suivantes :
- l'ajout à l'huile de RDB ou au mélange de silice synthétique d'huiles de RDB en quantité allant de 1% à 3% dans un réacteur agité à une température allant de 80 à 100°C et avec un niveau de pression résiduelle de moins de 50 mbar,
- au moins une filtration, de préférence réalisée à travers un ou plusieurs papiers filtre ayant différents taux d'efficacité d'absorption, tel à retenir des substances indésirées comme des molécules organométalliques et de l'eau.

17. Méthode selon la revendication 16 comprenant en outre les étapes suivantes :
- une analyse qualitative de l'huile ou du mélange d'huiles, en particulier une mesure de la quantité et de la taille des particules présentes dans l'huile ou dans le mélange d'huiles afin de définir la classe à laquelle il appartient selon le standard NAS 1638,
- au moins une étape de filtration supplémentaire au moyen d'un ou plusieurs papiers filtre ayant différents taux d'efficacité d'absorption tel à augmenter l'efficacité d'absorption à chaque étape de filtration, où ladite au moins étape supplémentaire de filtration ne fournit pas de silice synthétique supplémentaire à ajouter.
